# EUROPEAN PATENT APPLICATION

(11) **EP 1 262 102 A1**
(43) Date of publication of application: **04.12.2002**
(21) Application number: 01113232.1
(22) Date of filing: 30.05.2001
(51) Int. Cl.: A21C 11/00

(54) **Process for pizza preparation**

(71) Applicant: Advanced Food System S.A., 6900 Lugano (CH); Grieco, Leonardo, 21050 Saltrio (Varese) (IT)
(72) Inventor: Grieco, Leonardo, 21050 Saltrio (IT)
(74) Representative: Zardi, Marco

(57) **Abstract**

Process for pizza preparation comprising the subsequent steps of:
a) preparing a dough comprising flour, water and baker's yeast,
b) cutting out from this dough, which has just been prepared, disks of about 140-400 g, with a diameter of about 12-25 cm and a thickness of 5-10 mm,
c) leaving said disks to rise at a prefixed temperature and humidity,
d) radially expanding said disks of risen dough by subjecting them to centrifugal force to bring them to a diameter of about 30-60 cm and to a thickness less than or equal to 3 mm, obtaining bases for said pizzas.

## Description

### Field of Application

In its most general aspect, the present invention regards the field of food industry.

In particular, the invention refers to a process for preparing pizzas endowed with organoleptic and structural characteristics, which are quite similar to those of home-made pizzas prepared by pizza makers.

### Prior art

The pizza is a type of food which is achieving growing success, not just in Italy but also in the rest of Europe and in countries which have eating traditions which are very different to those in Italy, such as, for example, the United States and Japan. The reasons for such a success can be found in its organoleptic characteristics, which meet the general needs of consumers, and in its wholesomeness from a nutritional point of view.

Home-made pizzas prepared by expert pizza makers are still unmatchable in terms of organoleptic properties, nevertheless the food industry has for a long time been trying to produce quick-preparation products, which are as similar as possible to home-made pizzas.

On the other hand, the preparation of home-made pizzas requires, besides having a substantial ability in the manipulation of the dough to obtain extremely light yet whole pizza bases, also quite a long period of time to first leave the total mass of dough to rest and then to rise the portion taken from the mass, before its manual flattening out into the form of a pizza base.

The methods proposed for industrial production of pizza bases have not always been able to put together the two requirements mentioned above, where on the one hand there is the desire to obtain a pizza base which is as similar as possible to home-made pizzas and, on the other hand, there is the wish for it to be produced in a much reduced time-period with respect to the traditional method.

To satisfy the first requirement, the technology of this field has evolved in time, passing from techniques which substantially foresaw the dough being rolled or pressed (see for instance documents US 4031684 and W096/28979) to methods seeking to mechanically imitate the operations carried out manually by the pizza maker. Examples of these last methods can be seen in documents US 3390645 and US 4690043, which describe the preparation of circular and flat pizza bases by submitting portions of pizza dough to centrifugal force. A further improvement and a simplification of this technique are described in the patent application EP-A-0 904 696.

Using the aforementioned technique, one can avoid the elimination of air bubbles that form during the rising step, elimination that becomes clear when the risen portions of dough are flattened out into the form of pizza bases through pressing or rolling. In such a way the consistency of the pizza base, after cooking, turns out to be very similar to that of home-made pizzas.

However, the methods that have just been mentioned suffer from the drawback that they require quite a long overall time to achieve the desired pizza bases, since they foresee the execution of all the steps required for the preparation of traditional pizzas, which are:
a) making the dough,
b) leaving the dough to rest,
c) portioning out of the dough,
d) rising of the individual portions,
e) flattening out the dough into bases,
f) adding the toppings and cooking.

Only in the patent US 4251549 a different process has been proposed, which does not include the step of leaving the dough to rest that normally requires many hours, up to 12, at room temperature.

The process according to US 4251549 foresees the steps of:
a) making the dough,
b) portioning out the dough,
c) pressing out the dough to form the bases,
d) rising,
e) cooking in the oven.

Therefore, the resting step is eliminated and the rising takes place on the ready-formed bases. This Process requires the adding to the dough of ingredients which are not normally present in pizza dough, such as fat (margarine), maltodextrine and sucrose, and for the rising step to be carried out in quite extreme conditions. Moreover, this only allows the preparation of pizza bases of high thickness (3-4 mm), which make cooked pizzas that are up to 10-12 mm thick, that is pizzas that are quite different from home-made ones.

Given the prior art illustrated above, the technical problem underlying the present invention is to provide a process for mechanically producing pizzas, which have organoleptic and structural characteristics that are as close as possible to those of pizzas made by hand by expert pizza makers, in substantially reduced times, more suitable for mass production and without the use of ingredients to increase the speed of the resting and/or rising steps.

Such a problem is solved, according to the invention, by a process for pizza preparation comprising the subsequent steps of:
a) preparing a dough comprising flour, water and baker's yeast,
b) cutting out from this dough, which has just been prepared, disks of about 140-400 g, with a diameter of about 12-25 cm and a thickness of 5-10 mm,
c) leaving said disks to rise at a prefixed temperature and humidity,
d) radially expanding said disks of risen dough by subjecting them to centrifugal force to bring them to a diameter of about 30-60 cm and to a thickness less than or equal to 3 mm, obtaining bases for said pizzas.

The aforementioned prefixed temperature and humidity are preferably the following: temperature 25-35°C and relative humidity 80-90%.

The rising takes place in such conditions for a time period generally between 90 and 180 minutes.

The pizza bases thus obtained can then be topped and cooked in the oven. Alternatively, they can be immediately frozen or first subjected to a pre-cooking step and then frozen or else vacuum-packed or packed in a modified atmosphere. In this case, the consumer will simply have to top the pre-cooked pizza base and finish off the cooking of the pizza in the oven.

According to a further embodiment, in accordance with the present Process, it is possible to add a topping to the pre-cooked pizza bases and then freeze, vacuum-pack or package them in a modified atmosphere.

In this case, the consumer will simply have to finish off the cooking of the ready-topped pizza in the oven.

The step d) of expansion of the disks of dough can take place through one of the devices described in the prior art documents cited above US 3390645 and US 4690043 but it preferably takes place with the help of the device described in the patent application EP-A-0 904 696.

It should be noted that the process according to the invention, contrary to all the process of the prior art cited above, with the exception of US 4251549, does not include a resting step for the dough before the cutting out step.

As was seen before, not even US 4251549 comprises such a resting step but requires that the rising takes place on bases which are already completely flattened out by pressing. This impedes to obtain pizza bases with the characteristic thickness of home-made pizzas because the risen bases, once they are flattened are extremely fragile and subject to breaking, and thus must have a high thickness to be able to bear the subsequent steps of treatment.

With the Process according to the invention, however, it is possible to obtain pizza bases, which are perfectly comparable to home-made ones in thickness and consistency, in substantially shorter times than required by the traditional and prior art processes mentioned above, with the consequent substantial reduction in production costs.

The process according to the invention is obviously suitable for the production of pizzas and/or pizza bases on an industrial scale, but is also particularly suitable to be used in the area of small production and immediate distribution centres such as those represented by fast-food outlets. The process according to the invention, indeed, besides being absolutely fast, is also fairly simple to carry out. In fact, it requires cheap and simple equipment, such as a low-speed mixer, a cupboard for the rising of the disks and a device for the radial expansion of the disks of dough, which per se causes little encumbrance and is easy and safe to use.

It is not even necessary for the operators making the pizzas to have any special manual ability, since the most delicate operation, that is the radial expansion of the disks of dough, is entirely carried out mechanically.

### Detailed description

The present invention will be further illustrated by way of a non-limiting example of the pizza base production through the process according to the invention.

### EXAMPLE

A pizza dough was prepared from the following ingredients (parts in weight):

| | |
|---|---|
| Wheat flour type 0 | 100 |
| Water | 55 |
| Salt | 2.5 |
| Brewer's yeast | 0.5 |

The above ingredients are mixed by a fork or spiral mixer in order to obtain a uniform dough, which is taken to a cutting machine to be subdivided into disks weighing about 210 g and of a diameter of about 20 cm.

These disks are put into a rising cell in which they stand for about 100 minutes at a temperature of 33°C and a relative humidity of 80%.

When they come out of the rising cells, the disks of risen dough are radially expanded by subjecting them to centrifugal force, using the device described in the patent application EP 0 904 696, to thus obtain disks of dough of a width of about 2 mm and of a diameter of about 50 cm.

The disks of dough so obtained are then subjected to the usual steps of topping and cooking in the oven.

## Claims

1. Process for pizza preparation comprising the subsequent steps of:
a) preparing a dough comprising flour, water and baker's yeast,
b) cutting out from this dough, which has just been prepared, disks of about 140-400 g, with a diameter of about 12-25 cm and a thickness of 5-10 mm,
c) leaving said disks to rise at a prefixed temperature and humidity,
d) radially expanding said disks of risen dough by subjecting them to centrifugal force to bring them to a diameter of about 30-60 cm and to a thickness less than or equal to 3 mm, obtaining bases for said pizzas.

2. Process according to claim 1, in which said step d) of rising takes place at a temperature of 25-35°C and a relative humidity of 80-90%.

3. Process according to claim 2, in which said step d) of rising takes place for a time between 90 and 180 minutes.

4. Process according to any of the previous claims, in which said pizza bases are topped and cooked in the oven.

5. Process according to any of the claims 1 to 3, in which said pizza bases are frozen.

6. Process according to any of the claims 1 to 3, in which said pizza bases are first subjected to a step of pre-cooking and subsequently are frozen or else are vacuum-packed or packed in a modified atmosphere.

7. Process according to any of the claims 1 to 3, in which said pizza bases are first subjected to a step of pre-cooking, then topped, and finally frozen, vacuum-packed or packed in a modified atmosphere.
